# EUROPÄISCHE PATENTANMELDUNG

(11) **EP 3 396 082 A1**
(43) Veröffentlichungstag der Anmeldung: **31.10.2018**
(21) Anmeldenummer: 17020182.6
(22) Anmeldetag: 28.04.2017
(51) Int. Cl.: E04G 23/02, F16L 5/02, E04B 1/72

(54) **VERSCHLUSSVORRICHTUNG FÜR EIN LOCH IN EINEM WAND- ODER BODENELEMENT**

(71) Anmelder: Hauff-Technik GmbH & Co. KG, 89568 Hermaringen (DE)
(72) Erfinder: Schmid, Jörg, 89129 Langenau (DE); Kurz, Ralf, 89537 Giengen (DE)
(74) Vertreter: König Szynka Tilmann von Renesse Patentanwälte Partnerschaft mbB

(57) **Zusammenfassung**

Die Erfindung betrifft eine Verschlussvorrichtung (1) zum Montieren in einem Loch (7) in einem Wand- oder Bodenelement (8), mit einem Verschlussteil (3) zum zumindest teilweisen Verschließen des Lochs (7), einem an dem Verschlussteil (3) vorgesehenen, sich in einer Längsrichtung (5) davon weg erstreckenden Montagezapfen (4) zum Einschieben in das Loch (7) und Verspannen darin, und einem sich senkrecht zur Längsrichtung (4) nach außen erstreckenden Montageflügel (6a) mit einer dem Verschlussteil (3) abgewandten Vorderkante (6aa), die nach außen hin zumindest abschnittsweise derart schräg zur Längsrichtung (5) abfällt, dass der Montageflügel (6) beim Einschieben des Montagezapfens (4) entlang der Vorderkante (6aa) in das Loch (7) rutschen und nach innen gestaucht werden kann.

## Beschreibung

Die vorliegende Erfindung betrifft eine Verschlussvorrichtung zum Montieren in einem Loch in einem Wand- oder Bodenelement.

Bei dem Loch kann es sich bspw. um ein oberirdisches Durchgangsloch in der Außenwand einer Trafostation handeln. Durch dieses kann als Baustromöffnung zeitweilig ein Kabel nach außerhalb der Trafostation verlegt werden, um so während einer Bauphase temporär eine Stromversorgung zu gewährleisten. Außerhalb solcher Versorgungsphasen kann dann ein Verschließen vorteilhaft sein, bspw. um einer unerwünschten Manipulation, Vandalismus bzw. auch dem Eindringen von bspw. Nagetieren und dergleichen vorzubeugen. Dies soll ein bevorzugtes Anwendungsgebiet der vorliegenden Verschlussvorrichtung angeben, den Gegenstand aber zunächst nicht in seiner Allgemeinheit beschränken.

Der vorliegenden Erfindung liegt das technische Problem zugrunde, eine besonders vorteilhafte Verschlussvorrichtung anzugeben.

Erfindungsgemäß wird dies mit der Verschlussvorrichtung gemäß Anspruch 1 gelöst, die ein Verschlussteil mit einem Montagezapfen daran aufweist, der in das Loch eingeschoben und zur Lagefixierung darin verspannt wird. Ferner weist die Verschlussvorrichtung mindestens einen Montageflügel auf, der sich nach außen erstreckt, senkrecht zu einer Längsrichtung, in welcher der Montagezapfen eingeschoben wird. Dieser Montageflügel hat eine dem Verschlussteil abgewandte Vorderkante, die nach außen hin zumindest abschnittsweise solchermaßen schräg zur Längsrichtung abfällt, dass der Montageflügel beim Einschieben entlang der Vorderkante in das Loch rutscht und dabei nach innen gestaucht wird. Der Montageflügel sitzt dann verspreizt in dem Loch und kann so die übrige Verschlussvorrichtung bspw. auch bereits in Position halten, bevor der Montagezapfen zur endgültigen Lagefixierung verspannt wird.

In dem Beispiel der Trafostation kann also vorteilhafterweise das Verschlussteil von außen angesetzt werden und ist dann bereits in Position gehalten. Für die endgültige Lagefixierung der Verschlusseinrichtung kann dann von der Innenseite der Trafostation her ein Spannelement auf den Montagezapfen aufgebracht werden, das dann also insoweit einer Manipulation von außen (Vandalismus etc.) nicht zugänglich ist. Die Montage kann vorteilhafterweise von einem Monteur in Alleinarbeit vorgenommen werden, weil der Montageflügel bereits eine gewisse vorläufige Halterung bietet, das Verschlussteil mit dem Montagezapfen also nicht aus dem Durchgangsloch fällt, wenn der Monteur nach dem Einschieben von der Außenseite her nach innerhalb der Trafostation geht, um den Montagezapfen von dort zu verspannen.

Bevorzugt können mehrere Montageflügel vorgesehen sein (siehe unten im Detail), welche die übrige Verschlussvorrichtung, insbesondere den Montagezapfen, dann beim Einsetzen bspw. auch zentrieren können. Der Montagezapfen weist zum Spannen bevorzugt ein Außengewinde auf (siehe unten), wenngleich im Allgemeinen dazu bspw. auch ein Exzenterhebel vorgesehen sein kann. Generell meint das "Verspannen" des Montagezapfens, dass dieser gegen ein Herausziehen aus dem Loch gesichert ist, jedenfalls innerhalb gewisser Grenzen. Der verspannte Montagezapfen hält das Verschlussteil in Position, bevorzugt in einer Anlage an einer Seitenfläche des Wand- oder Bodenelements.

Die Längsrichtung ist jene Richtung, in welcher der Montagezapfen eingeschoben und dann bspw. auch beim Verspannen gezogen wird. Bevorzugt hat der Montagezapfen eine längliche Form, wobei die Längenerstreckung entlang der Längsrichtung genommen wird. Um eine zu der Längsrichtung parallele Symmetrieachse kann der Montagezapfen bevorzugt dreh-, insbesondere rotationssymmetrisch sein, jedenfalls von einem etwaigen Außengewinde bzw. anderweitigen dem Verspannen dienenden Mitteln abgesehen. Bei montierter Verschlussvorrichtung liegt die Längsrichtung bevorzugt parallel zu einer Mittenachse des Lochs, um welche dieses bevorzugt dreh-, besonders bevorzugt rotationssymmetrisch ist.

Die Charakterisierung der Erstreckung des Montageflügels "nach außen" bzw. auch die Bezugnahme auf einen "äußersten Abschnitt" davon beziehen sich auf eine Mittenachse der Verschlussvorrichtung (im Folgenden der Einfachheit halber auch nur "Verschluss"), "nach außen" nimmt der Abstand zu der Mittenachse zu, "nach innen" ab. Die Mittenachse des Verschlusses fällt im montierten Zustand bevorzugt mit der Mittenachse des Lochs zusammen. Bevorzugt ist der Montagezapfen derart angeordnet, dass ihn die Mittenachse des Verschlusses durchsetzt, besonders bevorzugt fällt letztere mit einer vorstehend erwähnten Symmetrieachse des Montagezapfens zusammen (im Allgemeinen wäre gleichwohl auch ein exzentrisch platzierter Montagezapfen denkbar, insbesondere wenn mehrere Montagezapfen vorgesehen sind). Bevorzugt ist genau ein Montagezapfen vorgesehen.

Die Vorderkante des Montageflügels, entlang welcher dieser in das Loch rutscht, liegt dem Verschlussteil abgewandt, also an dem dazu in Längsrichtung entgegengesetzten Ende des Montageflügels. Die Vorderkante erstreckt sich jedenfalls in einem Abschnitt, der bspw. mindestens 20 %, 30 %, 40 %, 50 %, 60 %, 70 % bzw. 80 % ihrer gesamten Erstreckung ausmachen kann, schräg zur Längsrichtung, also nicht senkrecht und nicht parallel dazu. Besonders bevorzugt kann eine über ihre gesamte Erstreckung (100 %) schräge Vorderkante sein. "Schräg" kann bspw. einen Winkel zur Längsrichtung von mindestens 10°, 20° bzw. 30° und (davon unabhängig) bspw. höchstens 80°, 70° bzw. 60° meinen, wobei von zwei mit der Längsrichtung eingeschlossenen Winkeln der kleinere betrachtet wird (und die Vorderkante über ihre Erstreckung auch einen innerhalb eines entsprechenden Intervalls variierenden Winkel haben kann). Unabhängig davon im Einzelnen fällt die Vorderkante in ihrer schrägen Erstreckung nach außen ab, nimmt also nach außen der Abstand der Vorderkante von einer zur Längsrichtung senkrechten, das Verschlussteil durchsetzenden Ebene ab.

Bevorzugte Ausgestaltungen finden sich in den abhängigen Ansprüchen und der gesamten Beschreibung, wobei in der Darstellung der Merkmale nicht immer im Einzelnen zwischen den unterschiedlichen Anspruchskategorien unterschieden wird. Die Beschreibung eines für eine bestimmte Montage geeigneten Verschlusses ist also bspw. immer auch auf ein entsprechendes Montageverfahren bzw. eine entsprechende Verwendung zu lesen.

In bevorzugter Ausgestaltung ist der Montageflügel an dem Montagezapfen vorgesehen und erstreckt er sich davon weg nach außen. Der Montagezapfen und der Montageflügel können im Allgemeinen auch zusammengesetzt sein, also zuvor jeweils für sich gesondert hergestellt und dann zusammengebaut werden. Bevorzugt sind sie einstückig miteinander (nicht zerstörungsfrei voneinander trennbar), besonders bevorzugt sind sie monolithisch aus demselben durchgehenden Material geformt, bevorzugt in einem Gussverfahren, besonders bevorzugt durch Spritzguss, also als Spritzgussteil. Zunächst auch davon unabhängig können bevorzugt auch das Verschlussteil und der Montagezapfen einstückig, bevorzugt monolithisch miteinander geformt sein. Besonders bevorzugt ist die Gesamtheit aus Verschlussteil, Montagezapfen und Montageflügel ein Gussteil, bevorzugt ein Spritzgussteil. Die genannte Gesamtheit ist also bevorzugt aus derselben Komponente im selben Schritt spritzgegossen.

Wie bereits eingangs erwähnt, weist der Verschluss bevorzugt mehrere Montageflügel auf. Soweit vor- oder nachstehend Angaben zur bevorzugten Ausgestaltung "eines" bzw. "des" Montageflügels gemacht werden, ist dies implizit immer auch auf eine Anordnung mit mehreren Montageflügeln zu lesen, die dann jeweils entsprechend ausgestaltet sind. Es sind also bspw. an dem Montagezapfen bevorzugt mehrere Montageflügel angeordnet.

Bei einer bevorzugten Ausführungsform ist der Montageflügel in seiner Erstreckung nach außen zumindest abschnittsweise in Umlaufrichtung gekrümmt, hat er also anteilig auch eine Erstreckung in Umlaufrichtung. Die Umlaufrichtung bezieht sich auf einen Umlauf um die Mittenachse des Verschlusses, der Montageflügel erstreckt sich dann anteilig senkrecht dazu nach außen und in Umlaufrichtung. In einer Aufsicht, also entgegen der Längsrichtung darauf blickend, ist der Montageflügel dann jedenfalls nicht im Gesamten gerade, sondern folgt er zumindest abschnittsweise einer gekrümmten Linie.

Bevorzugt ist die Vorderkante des Montageflügels zumindest dort, wo sich dieser gekrümmt erstreckt, schräg zur Längsrichtung nach außen abfallend geformt, besonders bevorzugt auch darüber hinaus. Auch unabhängig davon im Einzelnen kann der zumindest abschnittsweise gekrümmte Montageflügel das Einschieben in das Loch erleichtern, muss der Verschluss beim Einschieben also ggf. weniger gedreht werden.

Bei einer bevorzugten Ausführungsform ist der Montageflügel zumindest in einem äußersten Abschnitt freitragend und damit in Umlaufrichtung auslenkbar. Der Montageflügel und das Verschlussteil sind dort bezogen auf die Längsrichtung nicht miteinander verbunden. In anderen Worten findet sich zwischen dem Verschlussteil und dem Montageflügel eine Trennfuge, bevorzugt können das Verschlussteil und der Montageflügel dort zueinander auch axial beabstandet sein, eine der Vorderkante entgegengesetzte Hinterkante des Montageflügels ist also zu dem Verschlussteil beabstandet. Unabhängig davon im Einzelnen kann die freitragende Ausgestaltung das Hineinverformen des Montageflügels beim Einschieben erleichtern und dann zugleich, aufgrund der federnden Lagerung, einen guten Halt in dem Loch gewährleisten.

Bei einer bevorzugten Ausführungsform ist das Verschlussteil ein Verschlussdeckel. Wenngleich im Allgemeinen bspw. auch ein Stopfen als Verschlussteil denkbar ist, ist also ein im Wesentlichen flächig ausgestaltetes Verschlussteil bevorzugt. Der Verschlussdeckel hat in einer Dickenrichtung, die bevorzugt mit der Längsrichtung zusammenfällt, eine deutlich kleinere Erstreckung als in jeder seiner dazu senkrechten Flächenrichtungen, bspw. von höchstens 1/3, 1/7, 1/10, 1/15 bzw. 1/20 (in der Reihenfolge der Nennung zunehmend bevorzugt) mit möglichen, davon unabhängigen Untergrenzen bei bspw. mindestens 1/500, 1/250 bzw. 1/100. Im Falle einer über die Fläche variierenden Dicke wird ein darüber gebildeter Mittelwert zugrunde gelegt.

Bevorzugt überragt der Verschlussdeckel den Montageflügel senkrecht zur Längsrichtung nach außen, verdeckt er ihn also in Längsrichtung gesehen. Sind mehrere Montageflügel vorgesehen, überragt der Verschlussdeckel bevorzugt sämtliche davon. Der Verschlussdeckel liegt bevorzugt an einer Seitenfläche des Wand- oder Bodenelements an, hat also entsprechend einen größeren Durchmesser als das Loch in dem Wand- oder Bodenelement, bspw. einen um mindestens das 1,1-, 1,2-, bzw. 1,3- fache größeren Durchmesser, mit möglichen (davon unabhängigen) Obergrenzen bei bspw. höchstens dem 3- bzw. 2-fachen. "Durchmesser" muss hierbei im Allgemeinen keine Kreisgeometrie implizieren, sondern ist als Mittelwert aus kleinster und größter Erstreckung zu lesen, der im bevorzugten Fall der Kreisgeometrie dem Kreisdurchmesser entspricht.

Einerseits kann eine Ausgestaltung des Verschlussdeckels unterbrechungsfrei und durchgehend (in seinen Flächenrichtungen) bevorzugt sein, sodass der Verschlussdeckel also bereits für sich das Loch verschließt. Andererseits kann der Verschlussdeckel aber auch eine Durchlassöffnung aufweisen; diese kann bspw. zunächst mit einem Blindverschluss verschlossen sein, der z. B. aus demselben Material wie der übrige Verschlussdeckel geformt sein kann, etwa über eine Sollbruchstelle damit verbunden. In der Durchlassöffnung kann aber auch ein Stopfen aus einem anderen Material vorgesehen sein. Die Durchlassöffnung kann zum Hindurchführen einer Leitung genutzt werden. Der Stopfen kann gegen die Leitung dichten oder zum Hindurchführen der Leitung auch herausgenommen werden, bspw. im Falle eines Blindverschluss-Stopfens. Es kann aber auch der dann gegen die Leitung dichtende Stopfen die Durchlassöffnung zunächst verschließen, der Stopfen kann nämlich bspw. eine Membran aufweisen, die dann mit dem Hindurchführen der Leitung durchstoßen wird. Andererseits kann der die Durchlassöffnung verschließende Stopfen beim Hindurchführen der Leitung auch entweder ersatzlos herausgenommen oder gegen einen anderen Stopfen mit einer Durchlassöffnung für die Leitung ausgetauscht werden.

Der Stopfen und der Verschlussdeckel können im Allgemeinen auch einstückig miteinander ausgebildet sein, etwa als 2-Komponenten-Spritzgussteil. Andererseits kann der Stopfen auch als gesondertes Teil hergestellt und dann in die Durchlassöffnung gesetzt werden und darin bspw. formschlüssig gehalten sein. Der Stopfen kann dazu bspw. außenseitig eine umlaufende Nut aufweisen, in welcher dann ein die Durchlassöffnung begrenzender Innenrand des Verschlussdeckels sitzt. Zum Einsetzen kann der Stopfen bspw. zusammengedrückt und in die Durchlassöffnung geschoben werden, um sich dann zu weiten und formschlüssig gehalten zu sein. Unabhängig von der Umsetzung im Einzelnen können in dem Verschlussdeckel bevorzugt auch mehrere Durchlassöffnungen vorgesehen sein, also mindestens 2 bzw. 3 Durchlassöffnungen, mit möglichen, davon unabhängigen Obergrenzen bei bspw. höchstens 10, weiter und besonders bevorzugt höchstens 8 bzw. 6 Durchlassöffnungen.

Es kann auch der Montagezapfen selbst zum Hindurchführen eines Kabels genutzt werden, also hohl ausgeführt sein. Wie das Ausführungsbeispiel illustriert, hat der Montagezapfen eine gewisse radiale Abmessung, steht also ein hinreichend großes Innenvolumen zur Verfügung. Der Hohlraum im Montagezapfen kann dann in einer Durchlassöffnung im Verschlussdeckel münden, die in einer in den vorherigen Absätzen beschriebenen Weise ausgestaltet sein kann. Das Nutzen des Montagezapfens selbst zum Hindurchführen einer Leitung kann bspw. insoweit vorteilhaft sein, als der montierte Montagezapfen aus der Wandöffnung hervorstehen kann, also gut zugänglich ist. Die gesamte Verschlussvorrichtung muss dann mitunter auch gar nicht demontiert werden, sondern die Leitung kann durch den Montagezapfen gefädelt werden (ohne Demontage eines Spannelements etc.).

Wie bereits erwähnt, weist der Verschluss in bevorzugter Ausgestaltung eine Mehrzahl in Umlaufrichtung zueinander versetzte Montageflügel auf, also mindestens 2, bevorzugt mindestens 3 Montageflügel, wobei mögliche Obergrenzen (davon unabhängig) bspw. bei höchstens 10, 8, 6 bzw. 4 Montageflügeln liegen können (in der Reihenfolge der Nennung zunehmend bevorzugt). Besonders bevorzugt können genau vier Montageflügel vorgesehen sein.

Bei einer bevorzugten Ausführungsform ist der bzw. sind die weiteren Montageflügel in ihrer jeweiligen Streckung nach außen zumindest abschnittsweise in Umlaufrichtung gekrümmt, vgl. auch die vorstehenden Anmerkungen. Bevorzugt sind die Montageflügel dabei umlaufend in dieselbe Richtung gekrümmt, sodass die Montageflügel beim Einsetzen des Verschlusses mit einer leichten Drehbewegung gut in das Loch hineinrutschen.

Bei einer bevorzugten Ausführungsform sind die Montageflügel in Umlaufrichtung äquidistant zueinander, nächstbenachbarte Montageflügel haben dann also jeweils denselben Winkelabstand, bspw. von 90° bei vier Montageflügeln. Die Montageflügel können insgesamt bevorzugt drehsymmetrisch zueinander sein, mit der Mittenachse des Verschlusses als Achse der Drehsymmetrie. Auch unabhängig von einer äquidistanten/drehsymmetrischen Anordnung kann bevorzugt sein, dass sich ein jeweiliger Montageflügel in Umlaufrichtung jeweils über einen Winkelbereich von bspw. nicht mehr als 140°, 120°, 100°, 80°, 60° bzw. 40° erstreckt; mögliche Untergrenzen können davon unabhängig bspw. bei mindestens 5°, 10° bzw. 15° liegen (jeweils in der Reihenfolge der Nennung zunehmend bevorzugt).

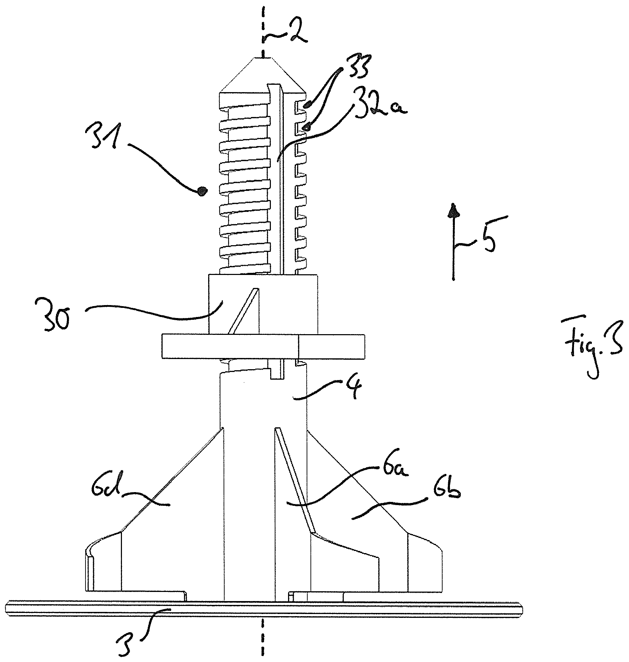

Bei einer bevorzugten Ausführungsform weist der Montagezapfen ein Außengewinde auf. Auf diesem ist ein Spannelement zumindest abschnittsweise (siehe unten) drehbar geführt, sodass der Montagezapfen durch Drehen des Spannelements gespannt werden kann. Bevorzugt erstreckt sich das Außengewinde von einem dem Verschlussteil entgegengesetzten Ende des Montagezapfens weg, bspw. im Wesentlichen bis zu dem bzw. den Montageflügel(n). Besonders bevorzugt ist genau ein Montagezapfen mit Außengewinde vorgesehen. Das Spannelement kann eine Mutter sein, mit der bspw. ein zweiter Verschlussdeckel an die dem ersten Verschlussdeckel entgegengesetzte Seitenfläche des Wand- oder Bodenelements gedrückt wird. Bevorzugt kann sich das Spannelement selbst direkt an der entgegengesetzten Seitenfläche abstützen, also auch selbst einen Verschlussdeckel bilden. Dieser kann das Durchgangsloch vollständig bedecken, oder auch eine Ausnehmung freilassen (vgl. Figuren 3-5 zur Illustration), insbesondere in Kombination mit einem vorstehend erwähnten Verschlussdeckel mit Durchlassöffnung.

In bevorzugter Ausgestaltung, die auch unabhängig von den Merkmalen des Hauptanspruchs, konkret unabhängig vom Vorhandensein des Montageflügels, von Interesse sein kann und offenbart sein soll, sind der Montagezapfen und das Spannelement für eine Schnellverspannung eingerichtet. Dazu durchsetzt eine sich axial, bevorzugt ausschließlich axial erstreckende Nut das Außengewinde und weist das Spannelement für die drehbare Führung nur einen nach innen hervortretenden Vorsprung, kein vollständig umlaufendes Innengewinde auf. Der Vorsprung kann in der Nut axial verschoben werden, womit sich ein großer Spannweg schneller als durch Drehen überwinden lässt. Ist das Spannelement dann bereits im Wesentlichen in der Spannposition, wird es gedreht und rutscht der Vorsprung damit in die Führung des Außengewindes.

Bevorzugt können in dem Außengewinde zwei sich jeweils axial erstreckende Nuten vorgesehen sein und weist das Spannelement entsprechend auch einen zweiten nach innen hervortretenden Vorsprung auf. Unabhängig davon, ob mit einer oder zwei Nuten versehen, kann die in dem Außengewinde geführte Drehbewegung bevorzugt durch einen Anschlag begrenzt sein, der verhindert, dass der Vorsprung durch ein Überdrehen wieder in eine Nut rutscht (in dieselbe im Falle genau einer Nut oder in eine andere).

Bei einer bevorzugten Ausführungsform ist das Spannelement mehrteilig, aus mindestens zwei Spannelementteilen vorgesehen. Ein erstes Spannelementteil bildet einen ersten Teil des Vorsprungs, und ein zweites Spannelementteil einen zweiten Teil davon. Die Spannelementteile können in unterschiedliche Relativpositionen zueinander gebracht werden, in einer ersten davon fluchten die Vorsprungteile derart, dass der Vorsprung in der Nut axial verschiebbar ist und das Spannelement über große Spannwege versetzt werden kann. In einer zweiten Relativposition sind die Vorsprungteile umlaufend derart versetzt, dass immer mindestens eines davon in dem Außengewinde geführt ist, auch wenn das jeweilig andere beim Drehen über die Nut hinweg geführt wird. Die Drehbewegung ist in diesem Fall also nicht durch einen Anschlag begrenzt, sondern die Vorsprungteile können die Nut überstreichen; aufgrund der in Umlaufrichtung versetzten Vorsprungteile ist das Spannelement insgesamt in dem Außengewinde geführt, auch bei einer 360°-Drehung und darüber hinaus. Mit der Drehbewegung kann ein höheres Anzugsmoment aufgebracht werden.

Auch in diesem Fall weist das Spannelement bevorzugt mehrere nach radial innen hervortretende Vorsprünge auf, besonders bevorzugt zwei. Jeder davon ist aus mehreren Vorsprungteilen aufgebaut, bevorzugt sind zwei Vorsprungteile je Vorsprung. Bei einem Spannelement mit zwei Vorsprüngen können die Vorsprungteile eines jeden Vorsprungs in der zweiten Relativposition bevorzugt um mindestens 60°, 70° bzw. 80° und (davon unabhängig) bspw. um nicht mehr als 120°, 110° bzw. 100° zueinander versetzt sein (in Umlaufrichtung).

Generell sind die Spannelementteile zumindest in der zweiten Relativposition in Bezug auf die axiale Richtung formschlüssig beisammengehalten. Bevorzugt ist eine Relativbewegung, mit der die Spannelementteile aus der ersten in die zweite Relativposition gebracht werden, durch einen Anschlag begrenzt; dieser kann insb. einen eben genannten Winkelversatz festlegen. Der Formschluss in Bezug auf die axiale Richtung kann bspw. realisiert sein, indem ein Spannelementteil zumindest abschnittsweise radial größer als das andere ist und dieses umgreift, jedenfalls in der zweiten Relativposition. Das radial größere Spannelementteil kann axial gesehen zumindest abschnittsweise, bevorzugt insgesamt eine kreisförmige Außenform haben. Daran kann zumindest abschnittsweise ein nach radial innen hervortretender Kragen vorgesehen sein, der das andere Spannelementteil axial hält (jedenfalls in der zweiten Relativposition).

Wie bereits erwähnt, kann der gesamte Aspekt "Schnellverspannung" (mit einteiligem oder auch mehrteiligem Spannelement) auch unabhängig von dem Vorhandensein des Montagezapfens von Interesse sein. Es soll also ausdrücklich offenbart sein:
Eine Verschlussvorrichtung zum Montieren in einem Loch in einem Wand- oder Bodenelement, mit einem Verschlussteil zum zumindest teilweisen Verschließen des Lochs, einem an dem Verschlussteil vorgesehenen, sich in einer Längsrichtung davon weg erstreckenden Montagezapfen und einem Verspannelement, das an einem Außengewinde des Montagezapfens geführt ist, wobei der Montagezapfen und das Spannelement für eine Schnellverspannung in einer in den vorstehenden Absätzen und/oder den abhängigen Ansprüchen 9 und 10 beschriebenen Weise eingerichtet sind. Dabei sind ausdrücklich Kombinationen mit anderen der vorliegend offenbarten Merkmale möglich. Das Verschlussteil kann in diesem Zusammenhang auch einen Elastomerkörper aufweisen, der mit dem Spannen des Spannelements axial gestaucht werden kann, um sich senkrecht dazu zu weiten und dichtend an eine das Loch begrenzende Laibung anzulegen, ggf. auch an eine hindurchgeführte Leitung. Der Montagezapfen kann den Elastomerkörper axial durchsetzen und zwischen dessen axialen Stirnseiten die Spannkraft vermitteln, welche den Elastomerkörper axial staucht.

Die Erfindung betrifft auch eine Verwendung des Verschlusses, bei welcher dieser in einem Loch montiert wird. Dabei wird der Montagezapfen in der Längsrichtung in das Loch eingeschoben, wobei der Montageflügel entlang seiner Vorderkante in das Loch rutscht und dabei nach innen gestaucht wird. Generell meint das Stauchen, dass ein maximaler, von der Mittenachse des Verschlusses senkrecht nach außen genommener Radius des Montageflügels abnimmt, bspw. um mindestens 5 %, 10 %, 15 %, 20 %, 25 % bzw. 30 % mit möglichen (davon unabhängigen) Obergrenzen bei bspw. höchstens 70 %, 60 %, 50 % bzw. 40 % (jeweils in der Reihenfolge der Nennung zunehmend bevorzugt). Unabhängig davon im Einzelnen liegt der nach innen gestauchte Montageflügel an einer das Loch begrenzenden Laibung an, bevorzugt mit einer infolge seiner gekrümmten Erstreckung nach außen gewandten Seitenfläche. Der Montageflügel hält die übrige Verschlussvorrichtung verspreizt in dem Loch, bevorzugt gemeinsam mit (einem) weiteren Montageflügel(n).

Bei einer bevorzugten Ausführungsform ist das Loch ein Durchgangsloch, verbindet es also die beiden einander entgegengesetzten Seitenflächen des Wand- oder Bodenelements. Das Verschlussteil, bevorzugt der Verschlussdeckel, legt sich dann an eine der Seitenflächen an; an der anderen, entgegengesetzten Seitenfläche stützt sich das Spannelement ab, das bevorzugt auf einem Außengewinde des Montagezapfens geführt ist. Bevorzugt liegt das Spannelement an der Seitenfläche an; bevorzugt wird es gedreht, der Montagezapfen damit gespannt und das Verschlussteil in die Anlage an der entgegengesetzten Seitenfläche gezogen.

In bevorzugter Ausgestaltung wird der Verschluss in einem Wand- oder Bodenelement eines Containers oder eines Technikgebäudes montiert, bevorzugt in einem Wandelement, besonders bevorzugt einer Außenwand. Der Container wird temporär aufgestellt und kann bspw. als Büro- oder auch Wohncontainer genutzt werden, bspw. auf einer Baustelle. Das Technikgebäude ist ein dauerhaft errichtetes Gebäude, aber kein Wohngebäude, sondern zur Unterbringung von Technik genutzt, insbesondere einer elektrischen Anlage. Bevorzugt handelt es sich um eine Trafostation, die bspw. als Kompaktstation oder auch begehbar ausgeführt sein kann. Auch unabhängig davon im Einzelnen ist das Durchgangsloch bevorzugt oberirdisch vorgesehen.

Durch das Durchgangsloch kann zeitweilig eine Leitung verlegt werden, insbesondere ein Stromkabel; dies kann im Allgemeinen auch der temporären Versorgung des Containers/Gebäudes selbst dienen, bevorzugt wird die Stromversorgung nach außen verlegt. Besonders bevorzugt ist also eine Trafostation mit einer oberirdischen Baustromöffnung versehen, durch welche zeitweilig bedarfsweise (bspw. während einer Bauphase) Strom in einem Kabel nach außen geführt wird, wobei diese Baumstromöffnung im Falle der Nichtbenutzung mit einem vorliegend beschriebenen Verschluss verschlossen wird. Im Allgemeinen kann durch einen entsprechenden Verschlussdeckel mit Durchlassöffnung dann auch das Kabel verlegt werden, besonders bevorzugt wird der Verschluss für die zeitweilige Belegung der Baustromöffnung vollständig herausgenommen und dann nach der Belegung wieder eingesetzt.

Im Folgenden wird die Erfindung anhand eines Ausführungsbeispiels näher erläutert, wobei die einzelnen Merkmale im Rahmen der nebengeordneten Ansprüche auch in anderer Kombination erfindungswesentlich sein können und auch weiterhin nicht im Einzelnen zwischen den unterschiedlichen Anspruchskategorien unterschieden wird.

Im Einzelnen zeigt
- Figur 1: einen erfindungsgemäßen Verschluss in einer Seitenansicht;
- Figur 2: den Verschluss gemäß Figur 1 in einer Aufsicht;
- Figur 3: den Verschluss gemäß den Figuren 1 und 2 in einer Seitenansicht bei aufgesetztem Spannelement;
- Figur 4: das Spannelement der Anordnung gemäß Figur 3 in einer Ansicht von unten;
- Figur 5: die Anordnung gemäß Figur 3 in einer Aufsicht;
- Figur 6a: ein aus zwei Spannelementteilen aufgebautes Spannelement in einer ersten Relativposition axial gesehen;
- Figur 6b: die Anordnung gemäß Figur 6a in einem die Mittenachse 2 beinhaltenden Schnitt;
- Figur 7a: das Spannelement gemäß Figur 6a,b in einer zweiten Relativposition axial gesehen;
- Figur 7b: die Anordnung gemäß Figur 7a in einem die Mittenachse 2 beinhaltenden Schnitt.

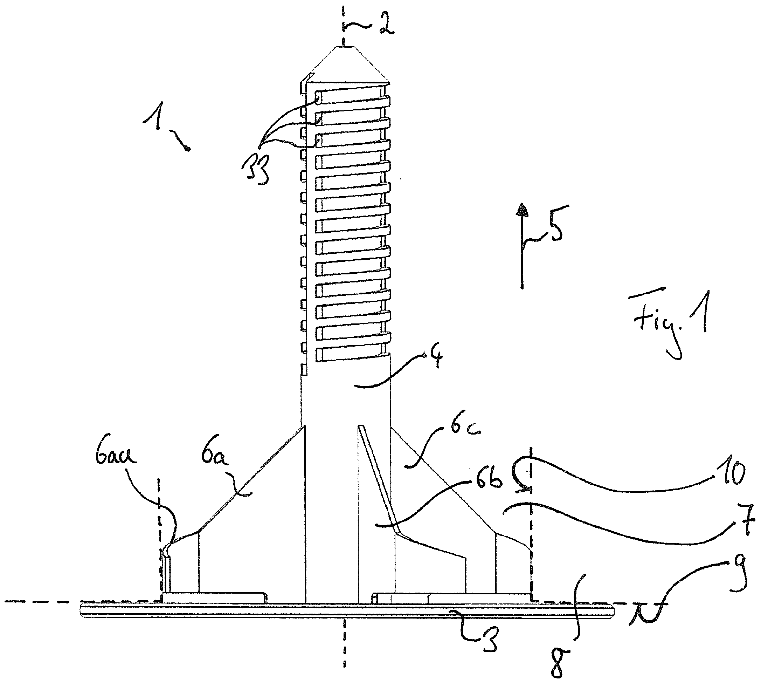

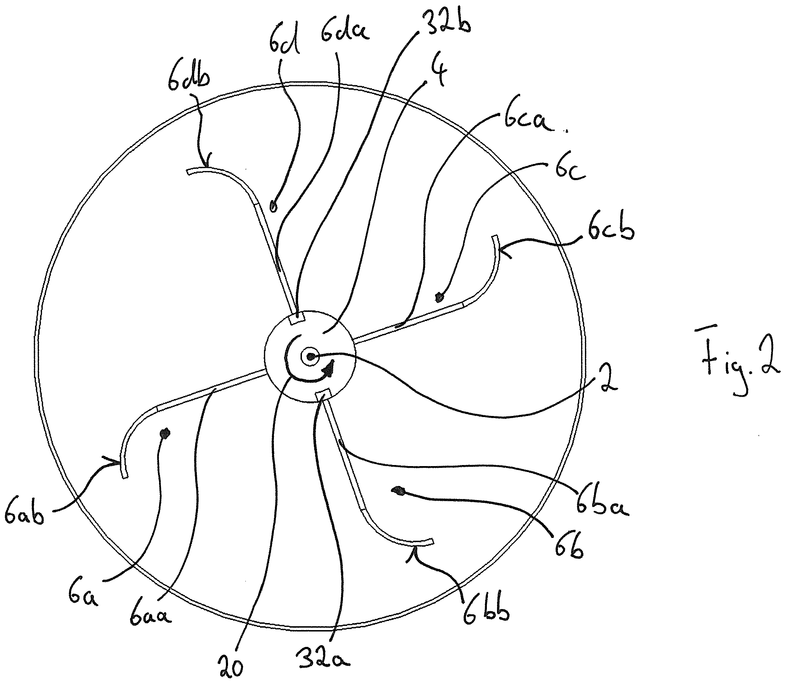

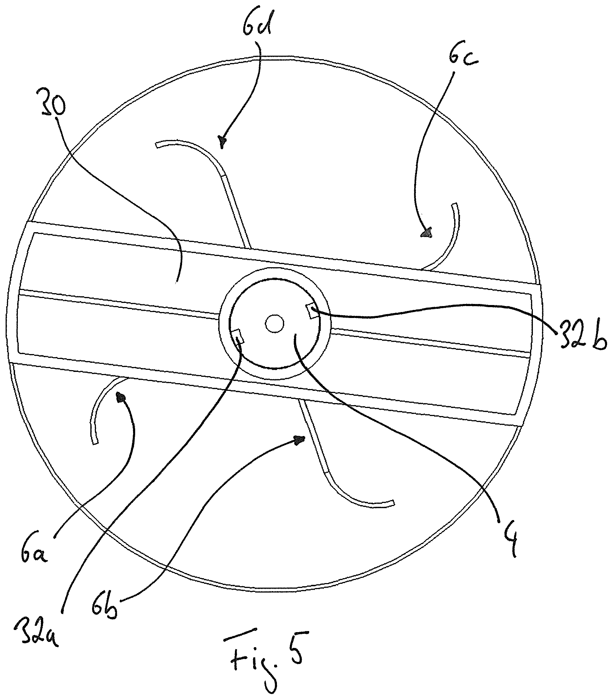

Figur 1 zeigt eine erfindungsgemäße Verschlussvorrichtung 1 in einer Seitenansicht, also senkrecht zu einer Mittenachse 2 darauf blickend. Der Verschluss weist ein Verschlussteil 3 und einen Montagezapfen 4 auf, der sich in einer Längsrichtung 5 von dem Verschlussteil 3 weg erstreckt. Das Verschlussteil 3 ist als Verschlussdeckel ausgebildet, vgl. auch die Aufsicht gemäß den Figuren 2 und 5.

Ferner weist der Verschluss insgesamt vier Montageflügel 6a-d auf, wovon der vierte 6d in der Seitenansicht gemäß Figur 1 hinter dem Montagezapfen 4 liegt, aber bspw. in der Aufsicht gemäß Figur 2 zu erkennen ist. Die Funktion der Montageflügel 6 ergibt sich in der Verwendung, wenn also der Verschluss montiert wird. Dabei wird der Montagezapfen 4 in ein Loch 7 in einem in Figur 1 nur strichliiert angedeuteten Wand- oder Bodenelement 8 eingeschoben bis das Verschlussteil 3 eine Anlage an einer Seitenfläche 9 des Wand- oder Bodenelements 8 findet. Das Loch 7 ist ein Durchgangsloch, aus dem der Montagezapfen 4 an der entgegengesetzten (nicht dargestellten) Seite des Wand- oder Bodenelements 8 hervorsteht. Der gesamte Verschluss wird dann mit einem Spannelement lagefixiert, vgl. die Figuren 3-5 im Detail.

Die Montageflügel 6 werden jedenfalls beim Einschieben des Montagezapfens 4 jeweils ein Stück weit nach innen, zur Mittenachse 2 hin gestaucht (in den Figuren nicht gezeigt, diese zeigen die unverformten Montageelemente 6). Dazu, damit sie also beim Einschieben in das Loch 7 hineinrutschen, weisen die Montageflügel 6 jeweils eine nach außen schräg zur Längsrichtung 5 abfallende Vorderkante 6aa-da auf, vgl. auch Figur 2. Die Montageflügel 6 rutschen entlang ihrer jeweiligen Vorderkante 6aa-da in das Loch 7 und liegen dann an der dieses begrenzenden Laibung 10 an. Der Verschluss ist dann auch bereits vor dem Aufsetzen des Spannelements aufgrund der verspreizten Montageflügel 6 ein Stück weit in dem Loch 7 gehalten und zentriert, kann also während der Montage nicht bzw. nicht so leicht herausfallen, vgl. auch die Anmerkungen in der Beschreibungseinleitung.

Die Montageflügel 6 haben nicht nur jeweils eine schräg abfallende Vorderkante 6aa-6da, sondern erstrecken sich jeweils in einem äußeren Abschnitt auch in Umlaufrichtung 20 gekrümmt, vgl. die Aufsicht gemäß Figur 2. In Folge der Krümmung weist je Montageflügel 6 eine jeweilige Seitenfläche 6ab-db jeweils nach außen (ohne die Krümmung wären die Seitenflächen 6ab-6db jeweils alleine in Umlaufrichtung 20 orientiert). Aus der Seitenansicht gemäß Figur 1 ist ferner zu erkennen, dass die Montageflügel 6 jeweils in einem äußersten Abschnitt freitragend ausgeführt sind. Dort ist also jeweils eine der jeweiligen Vorderkante 6aa-6da entgegengesetzte Hinterkante zu dem Verschlussteil 3 beabstandet. Die Montageflügel 6 sind folglich jeweils gut in Umlaufrichtung 20 auslenkbar, was einerseits das Einschieben in das Loch 7 vereinfacht und andererseits einen guten Spreizsitz schafft.

Figur 3 zeigt den Verschluss dann mit auf den Montagezapfen 4 aufgesetztem Spannelement 30. Für eine drehbare Führung des Spannelements 30 ist der Montagezapfen 4 mit einem Außengewinde 31 versehen. Durch Drehen des auf dem Außengewinde 31 geführten Spannelements 30 im Uhrzeigersinn wird dieses näher an das Verschlussteil 3 herangebracht und stützt sich dann an einer der Seitenfläche 9 gemäß Figur 1 entgegengesetzten Seitenfläche ab. Das Spannelement 30 zieht das Verschlussteil 3 in seine Anlage an der Seitenfläche 9.

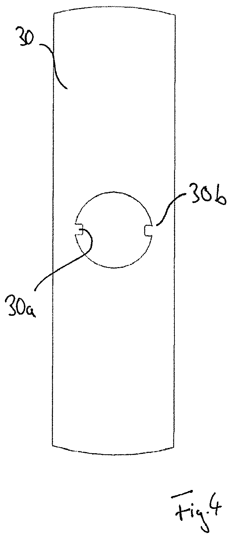

Die Anordnung ist ferner für ein Schnellspannen eingerichtet, wozu das Außengewinde 31 mit zwei sich jeweils axial erstreckenden Nuten 32a,b versehen ist, vgl. auch die Aufsicht gemäß Figur 2. Ferner ist das Spannelement 30 nicht mit einem vollständig umlaufenden Innengewinde ausgestattet, sondern weist es lediglich zwei nach radial innen hervortretende Vorsprünge 30a, b auf, vgl. die Ansicht von unten gemäß Figur 4 (Blick entlang der Längsrichtung 5 auf die Unterseite des Spannelements 30). Jeder der Vorsprünge 30a, b ist in einer jeweiligen Nut 32a,b jeweils axial verschiebbar, womit das gesamte Spannelement 30 axial verschiebbar ist, wenn die Vorsprünge 30a, b mit den Nuten 32a, b fluchten.

Es kann dann also das Spannelement 30 auf den Montagezapfen 4 gesetzt und in dieser fluchtenden Drehposition bis in eine Anlage an die Seitenfläche des Wand- oder Bodenelements 8 geschoben werden. So lässt sich ein großer Spannweg schnell überbrücken. Anschließend werden durch Drehen des Spannelements 30 im Uhrzeigersinn die Vorsprünge 30a, b in die Gewindeführung eingebracht, und wird das Spannelement 30 mit einer Halbdrehung fertig angezogen. Damit die Vorsprünge 30a, b dabei nicht nach der Halbdrehung wieder in die axiale Führung rutschen, ist die Drehbewegung durch einen Anschlag 33 begrenzt, vgl. auch Figur 1 mit einer leicht anderen Blickrichtung.

Figur 5 zeigt die Anordnung gemäß Figur. 3 in einer Aufsicht, entgegen der Längsrichtung 5 darauf blickend. Das Spannelement 30 ist mit seinen Vorsprüngen 30a,b nicht mehr axial fluchtend mit den Nuten 32a, b vorgesehen, sondern bereits ein Stück weit in die Gewindeführung eingedreht, allerdings noch nicht bis zum Anschlag 33.

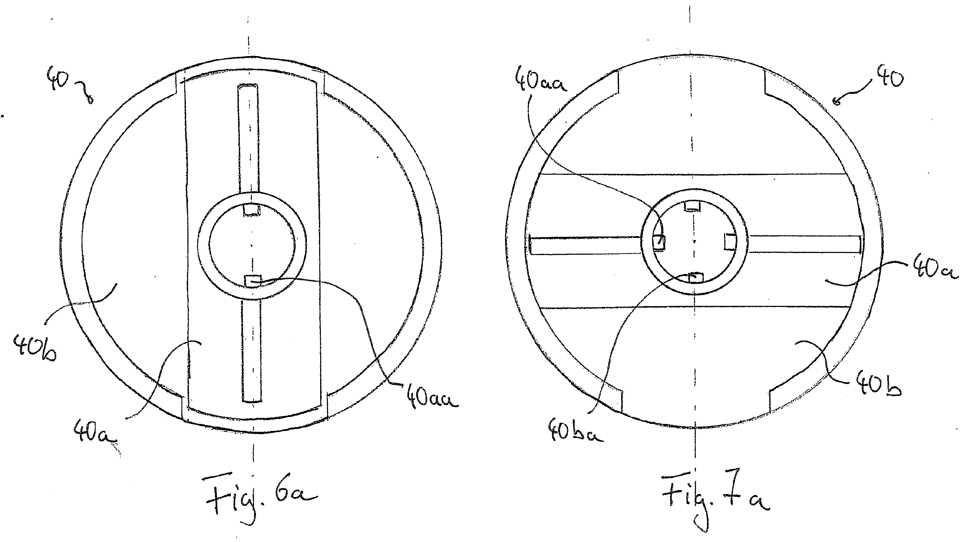

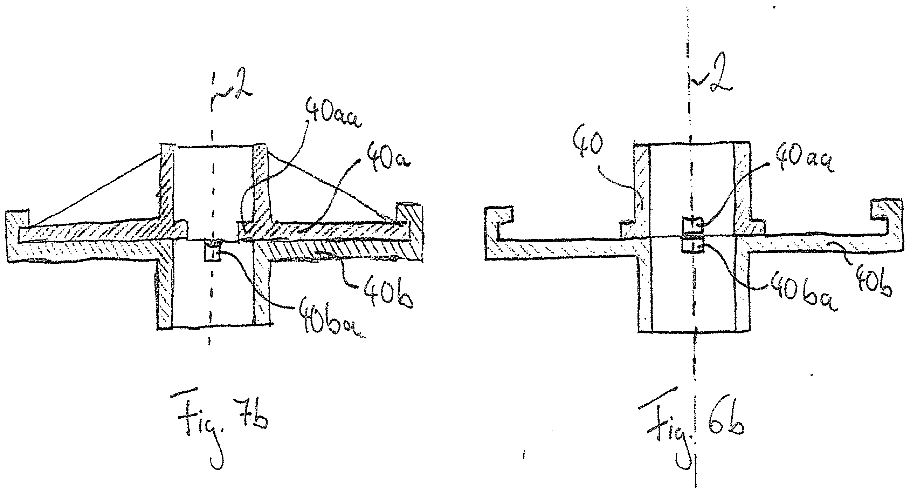

Die Figuren 6 und 7 zeigen ein alternatives Spannelement 40, das ebenfalls für eine kombinierte Schnell-/Drehverspannung geeignet ist. Es ist ebenfalls zur Montage auf einem Montagezapfen 4 mit Außengewinde vorgesehen, das von einer sich axial erstreckenden Nut durchsetzt wird. In diesem Fall ist die Drehbewegung des Spannelements 40 in dem Außengewinde jedoch nicht durch einen Anschlag begrenzt. Um zu verhindern, dass das Spannelement 40 bei einem Überdrehen unbeabsichtigt in die Schnellverspannposition rutscht, ist das Spannelement 40 mehrteilig aus einem ersten Spannelementteil 40a und einem zweiten Spannelementteil 40b aufgebaut. Die Figuren 6a und 7a zeigen die Spannelementteile 40a, b in einer ersten Relativposition, die Figuren 7a und 7b in einer zweiten Relativposition (jeweils axial gesehen und in einem die Mittenachse 2 beinhaltenden Schnitt).

Das erste Spannelementteil 40a weist ein erstes Vorsprungteil 40aa auf, das zweite Spannelementteil 40b ein zweites Vorsprungteil 40ba, vgl. insb. den Schnitt gemäß Figur 6b. Die beiden Vorsprungteile 40aa, ba können gemeinsam einen Vorsprung des Spannelements 40 bilden; dieses weist einen weiteren Vorsprung auf, der nicht mir Bezugszeichen versehen ist, für den die Anmerkungen aber analog gelten.

In Figur 6a sind die beiden Spannelementteile 40a, b derart relativ zueinander angeordnet, dass die Vorsprungteile 40aa, ba axial fluchten und damit gemeinsam in der Nut des Außengewindes verschiebbar sind. In der zweiten Relativposition sind die beiden Spannelementteile 40a, b um 90° zueinander verdreht und sind entsprechend auch die Vorsprungteile 40aa, ba umlaufend versetzt. Mit den beiden Vorsprüngen ist das dargestellte Spannelement 40 für ein Außengewinde mit 2 Nuten vorgesehen, die um 180° zueinander versetzt sind. Wird das Spannelement 40 in die zweite Relativposition gebracht, ist aufgrund des 90°-Versatzes je Vorsprung stets mindestens eines der Vorsprungteile 40aa, ba in dem Außengewinde geführt. Das Spannelement 40 kann also über die 180° hinaus gedreht werden und ist dabei an dem Außengewinde gehalten.

## Patentansprüche

1. Verschlussvorrichtung (1) zum Montieren in einem Loch (7) in einem Wand- oder Bodenelement (8), mit
einem Verschlussteil (3) zum zumindest teilweisen Verschließen des Lochs (7),
einem an dem Verschlussteil (3) vorgesehenen, sich in einer Längsrichtung (5) davon weg erstreckenden Montagezapfen (4) zum Einschieben in das Loch (7) und Verspannen darin, und
einem sich senkrecht zur Längsrichtung (4) nach außen erstreckenden Montageflügel (6a) mit einer dem Verschlussteil (3) abgewandten Vorderkante (6aa), die nach außen hin zumindest abschnittsweise derart schräg zur Längsrichtung (5) abfällt, dass der Montageflügel (6) beim Einschieben des Montagezapfens (4) entlang der Vorderkante (6aa) in das Loch (7) rutschen und nach innen gestaucht werden kann.

2. Verschlussvorrichtung (1) nach Anspruch 1, bei welcher der Montageflügel (6a) an dem Montagezapfen (4) vorgesehen ist und sich davon weg nach außen erstreckt.

3. Verschlussvorrichtung (1) nach Anspruch 1 oder 2, bei welcher der Montageflügel (6a) in seiner Erstreckung nach außen zumindest abschnittweise in Umlaufrichtung (20) gekrümmt ist.

4. Verschlussvorrichtung (1) nach einem der vorstehenden Ansprüche, bei welcher zumindest einer äußerster Abschnitt des Montageflügels (6a) freitragend und damit in Umlaufrichtung (20) gegenüber Verschlussteil (3) und dem Montagezapfen (4) auslenkbar ist.

5. Verschlussvorrichtung (1) nach einem der vorstehenden Ansprüche, bei welcher das Verschlussteil (3) ein Verschlussdeckel ist, der den Montageflügel (6a) senkrecht zur Längsrichtung (5) nach außen überragt, also in Längsrichtung (5) gesehen verdeckt, bevorzugt als unterbrechungsfrei durchgehender Verschlussdeckel.

6. Verschlussvorrichtung (1) nach einem der vorstehenden Ansprüche, bei welcher das Verschlussteil (3) ein Verschlussdeckel mit einer Durchlassöffnung darin ist, in welcher ein Stopfen vorgesehen ist, der sich beim Hindurchführen einer Leitung durch die Durchlassöffnung dichtend an die Leitung anlegt oder zum Hindurchführen der Leitung herausnehmbar ist.

7. Verschlussvorrichtung (1) nach einem der vorstehenden Ansprüche mit einem zweiten, sich senkrecht zur Längsrichtung (5) nach außen erstreckenden Montageflügel (6b) mit einer dem Verschlussteil (3) abgewandten Vorderkante (6ba), die nach außen hin zumindest abschnittsweise derart schräg zur Längsrichtung (5) abfällt, dass der zweite Montageflügel (6b) beim Einschieben des Montagezapfens entlang der Vorderkante (6ba) in das Loch (7) rutschen und nach innen gestaucht werden kann, wobei die Montageflügel (6a,b) in Umlaufrichtung (20) zueinander versetzt sind.

8. Verschlussvorrichtung (1) nach den Ansprüchen 3 und 7, bei welcher auch der zweite Montageflügel (6b) in seiner Erstreckung nach außen zumindest abschnittweise in Umlaufrichtung (20) gekrümmt ist, wobei die Krümmung der Montageflügel (6a,b) umlaufend in dieselbe Richtung weist.

9. Verschlussvorrichtung (1) nach einem der vorstehenden Ansprüche, bei welcher der Montagezapfen (4) ein Außengewinde (31) aufweist, auf dem ein Spannelement (30) zumindest abschnittsweise dreh- und damit spannbar geführt ist.

10. Verschlussvorrichtung (1) nach Anspruch 9, bei welcher das Spannelement (40) für die drehbare Führung einen Vorsprung (40a) aufweist, der in Bezug auf die drehbare Führung nach radial innen hervortritt, wobei in dem Außengewinde (31) eine den Vorsprung (40a) berücksichtigende, sich in Bezug auf die drehbare Führung axial erstreckende Nut (32a) vorgesehen ist, sodass das Spannelement (40) zur Überbrückung größerer Spannwege mit dem Vorsprung (40a) in der Nut (32a) axial versetzt und dann durch Drehen mit dem Vorsprung (40a) in dem Außengewinde (31) weiter angezogen werden kann.

11. Verschlussvorrichtung (1) nach Anspruch 10, bei welcher das Spannelement (40) mehrteilig ist, wobei ein erstes Spannelementteil (40a) einen ersten Teil (40aa) des nach radial inne hervortretenden Vorsprungs bildet und ein zweites Spannelementteil (40b) einen zweiten Teil (40ba) davon bildet, wobei die Vorsprungteile (40aa,ba) in einer ersten Relativposition der Spannelementteile (40a,b) fluchten und in der Nut (32a) axial versetzbar sind, und wobei die Vorsprungteile (40aa,ba) in einer zweiten Relativposition in Umlaufrichtung (20) derart versetzt sind, dass bei dem Drehen des Spannelements (40) immer zumindest eines der Vorsprungteil e (40aa,ba) in dem Außengewinde (31) geführt ist.

12. Verwendung einer Verschlussvorrichtung (1) nach einem der vorstehenden Ansprüche zum Montieren in einem Loch (7) in einem Wand- oder Bodenelement (8), wobei der Montagezapfen (4) in der Längsrichtung (5) in das Loch (7) eingeschoben wird und dabei der Montageflügel (6a) entlang der Vorderkante (6aa) in das Loch (7) rutscht, dabei nach innen gestaucht wird und dann verspreizt in dem Loch (7) sitzt.

13. Verwendung nach Anspruch 12 einer Verschlusseinrichtung (1) nach Anspruch 3, optional auch in Verbindung mit einem der Ansprüche 4 bis 11, bei welcher sich der Montageflügel (6a) mit einer infolge der zumindest abschnittsweise gekrümmten Erstreckung nach außen gewandten Seitenfläche (6ab) an eine das Loch (7) begrenzende Laibung (10) anlegt.

14. Verwendung nach Anspruch 12 oder 13, bei welcher das Loch (7) ein zwei einander entgegengesetzte Seitenflächen des Wand- oder Bodenelements verbindendes Durchgangsloch ist, wobei sich das Verschlussteil (3) an eine (9) der Seitenflächen anlegt und sich ein den Montagezapfen (4) spannendes Spannelement (30) beim Spannen an der anderen Seitenfläche abstützt und das Verschlussteil (3) so in Position hält.

15. Verwendung nach einem der Ansprüche 12 bis 14, bei welcher das Wand- oder Bodenelement (8) ein Wand- oder Bodenelement eines Containers oder Technikgebäudes ist, insbesondere einer Trafostation, bspw. einer Kompaktstation oder eines begehbaren Stationsgebäudes, wobei das Loch (7) bevorzugt eine oberirdische Baustromöffnung in einer Außenwand ist.
